Europäisches Patentamt

European Patent Office

Office européen des brevets

(11) Veröffentlichungsnummer : **0 071 021**
**B1**

(12) **EUROPÄISCHE PATENTSCHRIFT**

(45) Veröffentlichungstag der Patentschrift :
07.09.88

(51) Int. Cl.⁴ : **C 01 B 25/41, C 11 D 3/06**

(21) Anmeldenummer : **82105616.5**

(22) Anmeldetag : **25.06.82**

(54) **Verwendung von Natriumtriphosphat zur Herstellung von Waschmitteln.**

(30) Priorität : 23.07.81 DE 3129079

(43) Veröffentlichungstag der Anmeldung :
09.02.83 Patentblatt 83/06

(45) Bekanntmachung des Hinweises auf die Patenterteilung : 07.09.88 Patentblatt 88/36

(84) Benannte Vertragsstaaten :
AT BE DE FR GB IT LU NL SE

(56) Entgegenhaltungen :
DE-B- 1 137 161
FR-A- 2 020 000
FR-A- 2 080 557
FR-A- 2 084 424
FR-A- 2 333 856
GB-A- 1 192 514
US-A- 3 383 321
US-A- 3 397 947
US-A- 3 397 948
US-E-    24 381

(73) Patentinhaber : HOECHST AKTIENGESELLSCHAFT
Postfach 80 03 20
D-6230 Frankfurt am Main 80 (DE)

(72) Erfinder : Landgräber, Herbert, Dr.
Schaesbergstrasse 1
D-5030 Hürth (DE)
Erfinder : Kowalski, Werner
Am Ginsterberg 7
D-5354 Weilerswist (DE)
Erfinder : Scheffer, Johan
Multatulilaan 2
NL-4382 BZ Vlissingen (NL)
Erfinder : Haas, Hans, Dr.
Bünnagelring 17
D-5351 Swisttal-Strassfeld (DE)

## Beschreibung

Die vorliegende Erfindung betrifft die Verwendung von Natriumtriphosphat, dessen Hydratationsgeschwindigkeit so beeinflußt worden ist, daß es als wäßrige Suspension Slurries mit niedriger Viskosität ergibt, zur Herstellung von Waschmitteln.

Zur Gewinnung von Waschmitteln, die durch trockenes Zusammenmischen der Komponenten mit Natriumtriphosphat oder durch Aufsprühen einzelner Komponenten auf vorgelegtes, trockenes Triphosphat hergestellt werden, setzt man das Natriumtriphosphat bevorzugt in Hohlkugelform ein, wobei diese Hohlkugeln (beats) besonderen mechanischen Beanspruchungen ausgesetzt sind.

Zur Gewinnung von solchem hohlkugelförmigen Natriumtriphosphat wird eine auf entsprechende Molverhältnisse eingestellte Natriumorthophosphatlösung zunächst versprüht und das Sprühprodukt anschließend in einem Drehrohr bei Temperaturen von 300 bis 500 °C calciniert.

Dabei ist bekannt, daß sich die Stabilität der erhaltenen Hohlkugeln verbessern läßt, wenn man die Ausgangslösung zu einem Produkt versprüht, das nur 10 bis 40 Gew.% kondensierte Phosphate enthält bevor man es calciniert und wenn man dann das Calcinat anschließend bei Temperaturen von 10 bis 60 °C mit so viel Feuchtigkeit behandelt, daß der Glühverlust des Produktes 0,2 bis 7,0 Gew.% beträgt (FR-A-20 80 557).

Enthalten die versprühten Lösungen keinen oder nur einen geringen Anteil an Erdalkalisulfat, so wird zur Steigerung der Härte ein Zusatz von Erdalkalisulfat von 0,04 bis 0,6 Gew.%, berechnet als $SO_3$ und bezogen auf das erzeugte Natriumtriphosphat, als vorteilhaft empfohlen.

Im allgemeinen werden moderne Waschmittel aber durch eine einstufige Heißsprühtrocknung von sogenannten Waschmittelslurries erhalten, welche alle thermisch stabilen Waschmittelkomponenten in Form einer Lösung oder Suspension enthalten. Für die Bereitung solcher Slurries ist es jedoch nicht zweckmäßig, das Natriumtriphosphat in Form von besonders stabilen Hohlkugeln einzusetzen, welche erst aufwendig in einem mehrstufigen Verfahren hergestellt wurden, da sich diese Hohlkugeln in diesen wäßrigen Suspensionen ohnehin, zumindest weitgehend, auflösen würden.

Bei der Bereitung dieser Waschmittelslurries ergeben sich jedoch, verursacht durch das verwendete Natriumtriphosphat, bestimmte Schwierikeiten.

Natriumtripolyphosphat $Na_5P_3O_{10}$ liegt in wasserfreier Form in zwei Modifikationen vor : der Hochtemperaturphase I und der Tieftemperaturphase II. Mit Wasser bildet $Na_5P_3O_{10}$ Hexahydrat.

Hydrations- und Viskositätsverhalten in einem wäßrigen Slurry werden vorzugsweise bestimmt durch den Gehalt dieses Phosphates an seiner Hoch- oder Tieftemperaturform. Die Phase I hydratisiert schnell, die Phase II wesentlich langsamer.

Schnelle Hydratation (hoher Gehalt an Phase I) bedeutet rasche Wasserbindung, d. h. rasche und weitgehende Umwandlung in Hexahydrat. Dadurch verursacht wird aber gleichzeitig eine hohe Viskosität einer mit einem solchen Produkt hergestellten wäßrigen Suspension. Die Verarbeitung schnell hydratisiertender Phosphate z. B. zu Waschmitteln durch Sprühtrocknung erfordert deshalb besondere Einrichtungen, z. B. starke Rührer ; außerdem muß der Slurry möglichst rasch versprüht werden. Im Extremfall kann er sogar zu einer steifen Masse verdicken, so daß Wasser zum Verdünnen zugesetzt werden muß. Dieses Wasser muß später unter zusätzlichem Energieaufwand wieder verdampft werden.

Langsam hydratisiertende Phosphate mit hohem Anteil an Tieftemperaturform haben gegenüber den schneller hydratisierenden mit mehr Phase I auch eine Reihe von Nachteilen.

Langsame Hydratation bedeutet weniger rasche Wasserbindung : die Umwandlung in das Hexahydrat im Slurry bleibt unvollständig. Es verbleibt ungebundenes, überschüssiges Oberflächenwasser, das in einem fertigen Waschpulver nachträglich zu Verklumpungen und schlechter Lagerbeständigkeit des Produktes führt. Wegen der unvollständigen bzw. verzögerten Hydratation muß ggf. der Wassergehalt im Fertigprodukt auf ein Niveau gesenkt werden, welches wesentlich unter dem zur vollständigen Kristallisation zum $Na_5P_3O_{10} \cdot 6\,H_2O$ möglichen und/oder notwendigen liegt.

Bei Verwendung ausreichend schnell hydratisiertender Natriumtriphosphate kann hingegen der Wassergehalt im Fertigprodukt auf eine optimale Höhe eingestellt werden ; d. h., das gebundene Wasser entspricht in optimaler Weise dem zur Bildung von $Na_5P_3O_{10} \cdot 6\,H_2O$ notwendigen Anteil.

Ein erheblicher Nachteil der langsam hydratisiertenden Triphosphate ist außerdem, daß sie, im Gegensatz zu den schnell reagierenden, relativ lange im wässrigen Slurry verweilen müssen, wobei unerwünschte, weil weiniger wirksame, Hydrolyseprodukte (Ortho- und Pyrophosphat) entstehen.

Es sind bereits verschiedene Verfahren bekannt geworden, die Viskositätseigenschaften von Triphosphat in wässriger Aufschlämmung zu beeinflussen. So wird z. B. nach der DE-B 1 137 161 ein mit Calcium dotiertes wasserfreies Triphosphat hergestellt, dessen Viskositätskurve wesentlich flacher verläuft als die des undotierten Materials.

Auch nach längerer Verweilzeit bleibt ein mit solchen Phosphaten hergestellter Waschmittelslurry niedrigviskos, läßt sich leicht rühren und bildet keine Klumpen. Die daraus hergestellten Waschmittel haben jedoch den Nachteil, daß das Wasser in erheblichem Anteil als Oberflächenwasser vorliegt und das Produkt deshalb nicht lagerbeständig ist. Man ist deshalb gezwungen, den Wassergehalt im Fertigprodukt zu senken. Außerdem ist auch hier der Anteil an Hydrolyseprodukten so hoch, daß die Waschwirkung deutlich gemindert wird.

Außerdem ist bekannt (DE-B-25 54 497), daß durch partielle Hydratation von Natriumtriphosphat die Geschwindigkeit der Hexahydratbildung im Slurry beeinflußt werden kann. Teilhydratisierte Triphosphate mit 0,2-3 Gewichts% $H_2O$ hydratisieren im Slurry erheblich schneller als wasserfreie mit gleichem Phase I-Gehalt. Die Hexahydratbildung wird durch die Anwesenheit von Impf-Kristallen gefördert.

Diese Produkte sind aber — je nach Art und Ausführung der Slurry-Zubereitung — wegen relativ hoher Slurry-Viskositäten nur bedingt verarbeitbar.

Überraschenderweise wurde nun gefunden, daß teilhydratisiertes Natriumtriphosphat, das geringe Mengen von Verbindungen bestimmter zweiwertiger Metalle enthält, neue und überraschende Eigenschaften aufweist. Einerseits wird durch die Anwesenheit von Ionen dieser Metalle die an sich vorhandene Neigung des partiell hydratisierten Triphosphates zur Bildung eines hochviskosen Slurries aufgehoben, andererseits aber die Hydratationsgeschwindigkeit durch diese Metallionen nicht so weit verlangsamt, daß es zu unvollständiger Wasserbindung kommt.

Für den praktischen Einsatz bedeutet dies, daß sowohl während des Ansatzes als auch des Versprühens immer ein niedrigviskoser Slurry zur Verfügung steht, das entstehende Fertigprodukt jedoch praktisch kein Oberflächenwasser, sondern vielmehr vollständig gebundenes Hydratwasser enthält.

Im einzelnen besteht die vorliegende Erfindung darin, daß man ein Natriumtriphosphat, das einen Phase I-Gehalt von 0 bis 95 Gewichts%, einen Kristallwassergehalt von 0,1 bis 22 Gewichts% sowie einen Gehalt an einer in wäßrigem Medium ionenbildenden Verbindung der Metalle Calcium, Magnesium, Zink oder Strontium von 0,1 bis 2,0 Gewichts%, berechnet als Metall, aufweist, zur Herstellung von Waschmitteln, die durch Sprühtrocknung wäßriger Slurries der Komponenten dieser Waschmittel gewonnen werden, verwendet.

Die angestrebten Vorteile werden insbesondere durch die Verwendung eines Natriumtriphosphates erzielt, das einen Phase I-Gehalt von 0 bis 40 Gewichts%, einen Kristallwassergehalt von 0,3 bis 3,0 Gewichts% und einen Gehalt an der genannten Metallverbindung von 0,1 bis 0,6 Gewichts% besitzt.

Diese Metallverbindung sollte zweckmäßigerweise in Form eines Oxides, Phosphates, Sulfates oder Carbonates vorliegen.

Die Wirkung der Metallverbindung ist besonders bei Verbindungen des Ca, Mg und Zn ausgeprägt ; weniger wirksam ist Sr.

## Beispiel 1

Zur Herstellung eines Triphosphates nach dem Einstufen-Sprühverfahren werden 22,5 $m^3$ = 36 t Orthophosphat-Slurry angesetzt. Der $P_2O_5$-Gehalt des Ansatzes beträgt 30 Gewichts%.

117 kg $MgCO_3$ werden in 100 l Orthophosphorsäure aufgeschlämmt und die Aufschlämmung dem Orthophosphat-Ansatz zugegeben. Das Na : P-Verhältnis im Slurry wird auf 5 : 3 eingestellt.

Der Ansatz wird in einem Sprühturm in bekannter Weise verdüst ; die Abgastemperatur ist dabei auf 400 °C eingestellt.

Das fertige Triphosphat hat einen $Na_5P_3O_{10}$-Gehalt von 97,6 %. Es enthält 0,2 % Mg. Der Phase I-Gehalt beträgt etwa 23 %.

Das Produkt wird in einer Expansionskammer mit Wasserdampf behandelt und anschließend pneumatisch in ein Lagersilo gefördert. Der Kristallwassergehalt des Produktes beträgt 0,3 %.

## Beispiel 2

Es wird gemäß Beispiel 1 ein Orthophosphat-Slurry angesetzt. In einem anderen Gefäß werden 115 kg Dicalciumphosphat (DCP) in 500 l Wasser aufgeschlämmt und diese Aufschlämmung mit Hilfe einer Pumpe direkt der Sprühdüse, in der der Orthophosphat-Slurry in einem Sprühturm versprüht wird, zugeführt.

In den Wirbelkammern der Sprühdüse vermischen sich Orthophosphatlösung und DCP-Aufschlämmung innig miteinander und werden gemeinsam versprüht. Das Fertigprodukt hat einen $Ca^{++}$-Gehalt von 0,6 %.

Es wird gemäß Beispiel 1 mit Wasserdampf behandelt. Der $H_2O$-Gehalt des Produktes beträgt 0,3 %. Form I-Gehalt 23 %.

## Beispiel 3

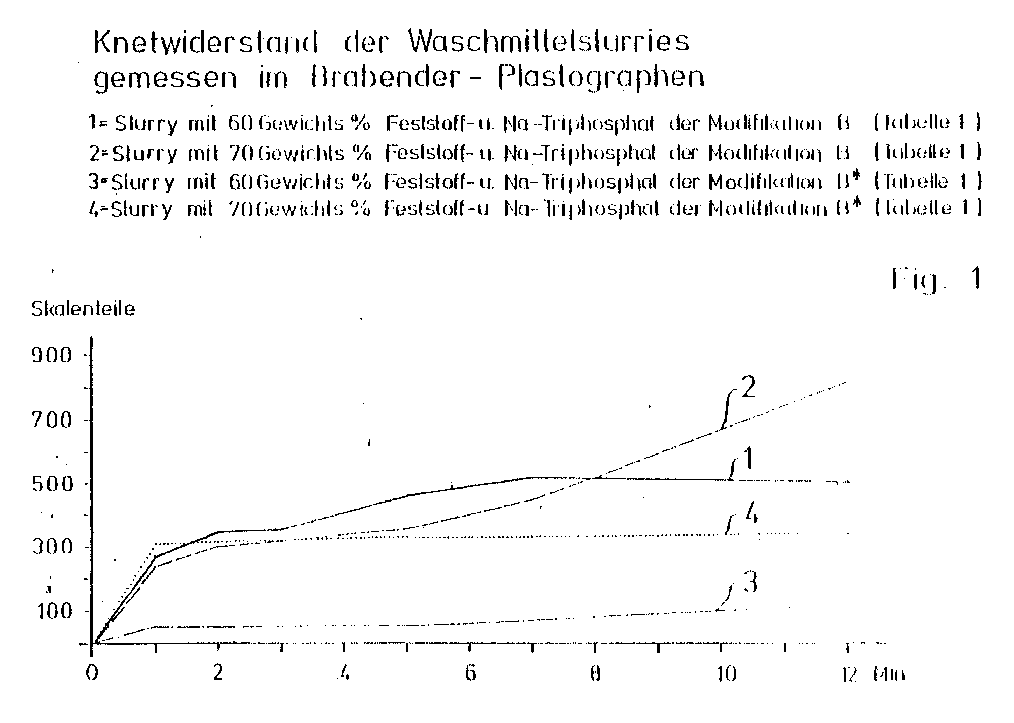

Ein Waschmittelslurry mit 60 % Feststoffgehalt in der Zusammensetzung gemäß der Tabelle 2 und unter Verwendung der Na-Triphosphat-Modifikation B gemäß Tabelle 1 wird hergestellt und in einem Brabender-Plastographen auf den Viskositätsverlauf in Abhängigkeit von der Rührzeit untersucht. Der Knetwiderstand ist durch Kurve 1 der Figur 1 dargestellt, in der als Maß für die Viskosität die jeweils auf dem Plastographen aufgezeigten Skalenteile über der Rührzeit aufgetragen sind.

3

### Beispiel 4

Ein Waschmittelslurry mit 70 % Feststoffgehalt in der Zusammensetzung gemäß der Tabelle 2 und unter Verwendung der Na-Triphosphat-Modifikation B gemäß Tabelle 1 wird hergestellt und in einem Brabender-Plastographen auf Viskosität in Abhängigkeit von der Rührzeit untersucht. Das Viskositätsverhalten ist durch Kurve 2 in Figur 1 dargestellt.

### Beispiele 5 und 6

Standardslurries mit 60 bzw. 70 % Feststoffen werden gemäß Tabelle 2 hergestellt unter Verwendung eines nach Beispiel 2 hergestellten Triphosphats (Modifikation B* in Tabelle 1). Die im Plastographen ermittelten Viskositätskurven 3 und 4 sind in Figur 1 dargestellt.

### Beispiele 7 bis 10

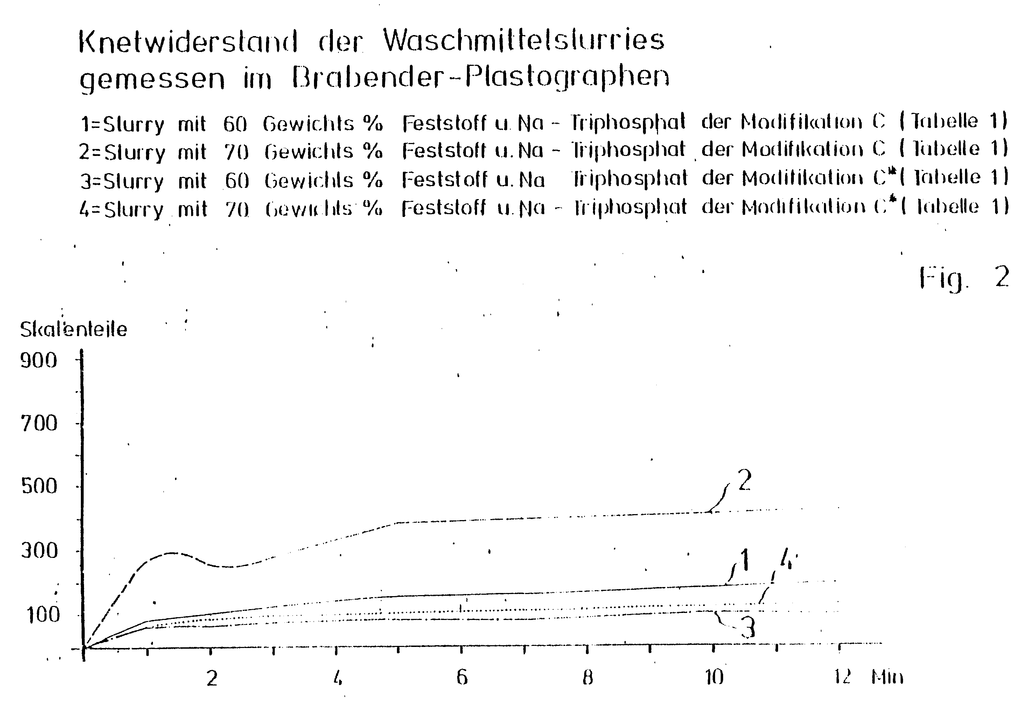

Analog den Beispielen 3 bis 6 werden Na-Triphosphat-Modifikationen C bzw. C* gemäß Tabelle 1, letztere hergestellt nach Beispiel 2, in Waschmittelslurries mit 60 bzw. 70 % Feststoffen gemäß Tabelle 2 eingesetzt. Ergebnisse siehe Kurven 1 bis 4 in Figur 2.

### Beispiel 11 (s. Tabelle 3-A)

500 kg eines Waschmittelslurries mit 60 % Feststoffgehalt gemäß Tabelle 2 werden unter Verwendung eines wasserfreien Na-triphosphats (Modifikation A der Tabelle 1) in einer Versuchsanlage angesetzt. Nach ca. 20 Minuten wird der hochviskose Slurry in einem Sprühturm heiß versprüht. Das erhaltene Produkt ist klumpig und feucht infolge eines zu hohen Wasseranteils von 16,9 %. Die Hydrolyse des eingesetzten Na-triphosphats A beträgt 10 %.

### Beispiele 12 und 13 (s. Tabelle 3, B* I und B* II)

Je 500 kg eines Waschmittelslurries mit je 60 % Feststoffgehalt gemäß Tabelle 2 werden unter Verwendung eines gemäß Beispiel 1 hergestellten Na-triphosphats (Modifikation B* der Tabelle 1) in einer Versuchsanlage angesetzt. Nach 10 Minuten Rührzeit hat die Viskosität konstante Werte von 19,20 bzw. 21,75 Pa.s erreicht und der Slurry kann versprüht werden.

Die Endprodukte sind trocken, ohne zu stauben und noch nach 14 Tasgen Lagerung gut rieselfähig. Die Wassergehalte entsprechen mit 11,3 bzw. 10,4 % nahezu dem theoretischen Wasseranteil, der zur Bildung des $Na_5P_3O_{10} \cdot 6 \ H_2O$ erforderlich ist. Die Hydrolyse der NTPP-Modifikation B* beträgt nur 4,6 bzw. 5,6 %.

### Beispiel 14 (s. Tabelle 3, B* III)

500 kg eines Waschmittelslurries mit 70 % Feststoffgehalt gemäß Tabelle 2 werden unter Verwendung eines gemäß Beispiel 1 hergestellten Na-triphosphats (Modifikation B* der Tabelle 1) in einer Versuchsanlage angesetzt.

Die Viskosität beträgt nach 10 Minuten Rührzeit konstant 28,50 Pa.s ; der Slurry kann problemlos versprüht werden. Das Sprühprodukt ist trocken, staubfrei und sofort gut rieselfähig. Der Wassergehalt beträgt 10 % und entspricht damit nahezu dem zur Bildung des $Na_5P_3O_{10} \cdot 6 \ H_2O$ notwendigen theoretischen Wasseranteil. Die Hydrolyse ist < 7 %.

(Siehe Tabellen Seite 5 ff.)

## Tabelle 1

In den Beispielen 3 bis 14 eingesetzte Natriumtriphosphat-Modifikationen

| Modifikation | | | | | |
|---|---|---|---|---|---|
| | A | B | B* | C | C* |
| % $P_2O_5$ | 57,5 . | 57,5 | 57,5 | 55,7 | 55,7 |
| % Mono-  ) | | | | | |
| % Di-  ) Phosphat | 2,2 | 2,5 | 2,4 | 6,4 | 6,7 |
| % Tri-  ) | 97,8 | 97,5 | 97,6 | 93,6 | 93,3 |
| % Glühverlust (360°C) | 0,1 | 0,3 | 0,3 | 2,5 | 2,7 |
| % Phase 1 | 33 | 24 | 23 | 41 | 39 |
| Hydratationsgeschwindigkeit (°C) | | | | | |
| nach 0 Minuten | 80,0 | 80,0 | 80,0 | 80,0 | 80,0 |
| nach 0,5 Minuten | 81,6 | 83,9 | 84,5 | 86,0 | 87,0 |
| nach 1 Minuten | 83,1 | 86,1 | 86,0 | 89,3 | 88,8 |
| nach 3 Minuten | 86,5 | 92,2 | 92,0 | 91,1 | 90,1 |
| nach 5 Minuten | 90,8 | 94,0 | 93,0 | 91,2 | 90,1 |
| nach 10 Minuten | 92,9 | 94,0 | 93,0 | 90,0 | 89,5 |

[1]) Bezogen auf Gesamtphosphat mit *) erfindungsgemäß Na-triphosphat-Modifikation

## Tabelle 2

Standardslurries mit modifizierten NTPP-Typen ;
Messung des Knetwiderstandes (= Viskosität) im Brabender-Plastographen

| Formulierungen des Fertigproduktes | | Einsatzmengen (%) für Slurries mit | |
|---|---|---|---|
| | | 60 % | 70 % Feststoffgehalt |
| Na-triphosphat (jeweils nach Tabelle 1) | 36 | 32 | 37,4 |
| Alkylbenzolsulfonat | 9 | 10,7[1] | 12,5[1] |
| nichtionisches Tensid | 3 | 2,7 | 3,1 |
| pulverisierte Seife | 3 | 2,7 | 3,1 |
| Mg-Silikat | 3 | 2,7 | 3,1 |
| Na-Silikat | 3 | 6,1[2] | 7,0[2] |
| Methylcellulose | 1 | 0,9 | 1,1 |
| Na-Perborat | 25 | ./. | ./. |
| Na-Sulfat | 8,5 | 7,5 | 8,8 |
| p-Toluolsulfonat | 1 | 0,9 | 1,1 |
| $H_2O$ | 7,5 | 33,9 | 22,9 |

[1]) mit 25 % Wasseranteil
[2]) als Na-Wasserglas mit 55,5 % Wasseranteil

Tabelle 3

Waschmittelherstellung im Heißsprühverfahren unter Verwendung erfindungsgemäßer Na-triphosphat-Modifikationen (gemäß Tabelle 1)

| Verfahren- und Produktparameter | Na-triphosphat-Modifikationen (Tabelle 1) | | | |
|---|---|---|---|---|
| | A | B*(I) | B*(II) | B*(III) |
| Slurry: % Feststoffgehalt | 60 | 60 | 60 | 70 |
| Slurry-Temperatur $^{o}$C) | 80 | 80 | 80 | 80 |
| Viskosität (Pa·s) (Brookfield-Viscosimeter, 12 rpm) | 40,00 | 19,20 | 21,75 | 28,50 |
| Sprühprodukt: % $P_2O_5$ | 24,5 | 25,2 | 23,6 | 23,4 |
| % Mono- ) | 0,8 | 0,6 | 0,8 | 0,7 |
| % Di- } Phosphat | 4,3 | 2,6 | 2,6 | 3,0 |
| % Tri- ) | 37,7 | 40,6 | 37,6 | 37,1 |
| % Gesamtphosphat | 42,8 | 43,8 | 41,0 | 40,8 |
| nicht hydrolisiertes Triphosphat (%) | 88 | 93 | 92 | 91 |
| % $H_2O$ (Gewichtsverlust bei 105$^{o}$ nach 3h) | 16,9 | 11,3 | 10,4 | 10,0 |
| Schüttgewicht (kg/l) | 0,4 | 0,36 | 0,39 | 0,38 |

0 071 021

**0 071 021**

**Patentanspruch**

Verwendung von Natriumtriphosphat mit einem Phase I-Gehalt von 0 bis 95 Gewichts%, einem Kristallwassergehalt von 0,1 bis 22 Gewichts% und einem Gehalt an einer in wäßrigem Medium ionenbildenden Verbindung der Metalle Calcium, Magnesium, Zink oder Strontium von 0,1 bis 2,0 Gewichts%, berechnet als Metall, zur Herstellung von Waschmitteln, die durch Sprühtrocknung wäßriger Slurries der Komponenten dieser Waschmittel gewonnen werden.

**Claim**

The use of sodium triphosphate having a phase I content of 0 to 95 % by weight, a water of crystallization content of 0.1 to 22 % by weight and a content of a compound of the metals calcium, magnesium, zinc or strontium which forms ions in aqueous medium of 0.1 to 2.0 % by weight, calculated as the metal, for the production of a detergent which is obtained by spray-drying an aqueous slurry of the components of this detergent.

**Revendication**

Utilisation de triphosphate de sodium ayant une teneur en phase I de 0 à 95 % en poids, une teneur en eau de cristallisation de 0,1 à 22 % en poids et une teneur en un composé ionisable en milieu aqueux des métaux calcium, magnésium, zinc ou strontium de 0,1 à 2,0 % en poids, calculée en métal, pour la fabrication de produits de lavage, qui sont obtenus par séchage par atomisation de bouillies aqueuses des composants de ces produits de lavage.

# Knetwiderstand der Waschmittelslurries
# gemessen im Brabender - Plastographen

1= Slurry mit 60 Gewichts % Feststoff-u. Na-Triphosphat der Modifikation B (Tabelle 1)
2= Slurry mit 70 Gewichts % Feststoff-u. Na-Triphosphat der Modifikation B (Tabelle 1)
3= Slurry mit 60 Gewichts % Feststoff-u. Na-Triphosphat der Modifikation B* (Tabelle 1)
4= Slurry mit 70 Gewichts % Feststoff-u. Na-Triphosphat der Modifikation B* (Tabelle 1)

Fig. 1

Skalenteile

# Knetwiderstand der Waschmittelslurries
## gemessen im Brabender-Plastographen

1=Slurry mit 60 Gewichts % Feststoff u. Na - Triphosphat der Modifikation C ( Tabelle 1)
2=Slurry mit 70 Gewichts % Feststoff u. Na - Triphosphat der Modifikation C ( Tabelle 1)
3=Slurry mit 60 Gewichts % Feststoff u. Na Triphosphat der Modifikation C*( Tabelle 1)
4=Slurry mit 70 Gewichts % Feststoff u. Na - Triphosphat der Modifikation C*( Tabelle 1)

Fig. 2